(19) Europäisches Patentamt

European Patent Office

Office européen des brevets

(11) **EP 0 251 020 B2**

(12) ## NEW EUROPEAN PATENT SPECIFICATION

(45) Date of publication and mention
of the opposition decision:
**01.05.1996 Bulletin 1996/18**

(45) Mention of the grant of the patent:
**04.03.1992 Bulletin 1992/10**

(21) Application number: **87108612.0**

(22) Date of filing: **15.06.1987**

(51) Int. Cl.⁶: $A23L\ 1/035$, $A23D\ 7/00$,
$A21D\ 2/16$

(54) **Process for the preparation of an emulsion composition**

Verfahren zur Herstellung einer Emulsionzusammensetzung

Procédé de fabrication d'une composition d'émulsion

(84) Designated Contracting States:
**AT BE CH DE ES FR GB GR IT LI LU NL SE**

(30) Priority: **28.06.1986 JP 152100/86**

(43) Date of publication of application:
**07.01.1988 Bulletin 1988/01**

(73) Proprietor: **ASAHI DENKA KOGYO KABUSHIKI
KAISHA
Arakawa-ku Tokyo 116 (JP)**

(72) Inventors:
• **Okutomi, Yasuo,
c/o ASAHI DENKA KOGYO K.K.
Arakawa-ku, Tokyo (JP)**
• **Edo, Hiroshi,
c/o ASAHI DENKA KOGYO K.K.
Arakawa-ku, Tokyo (JP)**

(74) Representative: **Grünecker, Kinkeldey,
Stockmair & Schwanhäusser
Anwaltssozietät
Maximilianstrasse 58
D-80538 München (DE)**

(56) References cited:
EP-A- 0 201 041          AU-A-  406 723
DE-A- 2 262 672          GB-A-  684 620
GB-A- 1 353 475          US-A- 3 502 482
US-A- 3 533 802          US-A- 3 924 018
US-A- 4 396 638

• **JOURNAL OF THE SCIENCE OF FOOD AND
AGRICULTURE, vol. 27, no. 11, November 1976,
pages 1064-1070, Blackwell Scientific
Publications, Oxford, GB; F.R. JACOBSBERG et
al.: "Lipid binding in wheat-flour doughs: the
effect of DATEM emulsifier"**
• **Organic Chemistry, eds. LF Fieser and M Fieser,
Reinhold Publishing Corporation, 3rd edition,
p.178 (1956)**
• **Food Emulsions, ed. S. Friberd, Marcel Dekker
Inc., p. 98-99 (1976)**

## Description

Field of the Invention:

The present invention relates to a process for preparing an emulsion composition having a pH of 2.0 to 12.0 and containing fat, water, acetylated tartaric acid esters of monoglycerides (DATEM) and base and/or salt, and to the use of the compositions prepared according to the invention as a dough improver for white pan bread.

Description of the Prior art:

Diacetyltartaric acid esters of monoglycerides have good anti-staling and gluten strengthening characteristics and, therefore, can be used as an improver, softener and dough conditioner in confectionery, breads and noodles. Customary improvers comprise wheat flour, starch, sweetening agents such as, e.g., sucrose, glucose or dextrose, milk powder, soy flour, diacetyltartaric acid esters of monoglycerides and other emulsifiers, and the improver is in the form of a powder and does not substantially contain water. Although the amount of improver depends upon the total content of diacetyltartaric acid esters of monoglycerides and other emulsifiers, the customary improver has been used in an amount between about 1 and 10% by weight on a flour basis.

A customary powdery improver containing DATEM has the disadvantage that the melting point of DATEM is less, about a temperature of 10°C, than that of other emulsifiers such as glycerol fatty acid esters (monoglyceride), succinic acid esters of glycerol fatty acid esters and calcium stearoyl lactylate (CSL).

Accordingly, the improver containing DATEM tends to form lumps under high temperature and high moisture conditions and, therefore, it disperses unevenly in the dough and the quality of the respective baked products is poor.

Generally, for confectionery and bakery use, edible emulsions, such as margarine and cream, are provided with an improver for increasing flavour and other characteristics. When DATEM is incorporated in said edible emulsions, such as margarine and cream, to elevate the emulsifier function by hydrating them, to be dispersed evenly, and to elevate operative efficiency by combining said improver with said edible emulsions, DATEM easily hydrolyzies with the passing of time, resulting in a loss of the emulsifier function accompanied by losing the distinct functions necessary for the use of the emulsion in confectionery, breads and noodles.

This is the reason why DATEM could not be incorporated in edible emulsions, such as margarine and cream.

From DE-A-22 62 672, stabilized emulsions comprising water, fat, sugar and emulsifier are known wherein the emulsifier can be the sodium salt of DATEM. The liquid emulsions are prepared by simply mixing the respective components, for example, the sugar is premixed with the emulsifier, and this premixture is subsequently dissolved in the aqueous phase by stirring and heating.

Description of the Invention:

An object of the present invention is to provide a process for preparing a stable emulsion wherein the hydrolysis of DATEM is markly depressed in the course of time.

This object is achieved by a process for preparing an emulsion having a composition according to any of the embodiments 1 to 12 of Table 1 or according to any of the embodiments 14 to 32 of Table 2.

Table 1

| | Embodiments | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| water | 40 % | 40 % | 40 % | 40 % | 40 % | 40 % | 40 % | 40 % | 40 % | 40 % | 40 % | 40 % |
| sodium carbonate | 0.2% | 0.3% | 0.4% | 0.5% | 0.6% | 0.7% | 0.8% | 0.9% | 1.0% | 2.0% | 4.0% | 8.0% |
| palm oil | 49.8% | 49.7% | 49.6% | 49.5% | 49.4% | 49.3% | 49.2% | 49.1% | 49.0% | 48.0% | 46.0% | 42.0% |
| DATEM | 10 % | 10 % | 10 % | 10 % | 10 % | 10 % | 10 % | 10 % | 10 % | 10 % | 10 % | 10 % |

Table 2

|  | embodiments | | | | | | | | | | | | | | | | | | |
|---|---|---|---|---|---|---|---|---|---|---|---|---|---|---|---|---|---|---|---|
|  | 14 | 15 | 16 | 17 | 18 | 19 | 20 | 21 | 22 | 23 | 24 | 25 | 26 | 27 | 28 | 29 | 30 | 31 | 32 |
| water | 40% | 40% | 40% | 40% | 40% | 40% | 40% | 40% | 40% | 40% | 40% | 40% | 40% | 40% | 40% | 40% | 40% | 40% | 40% |
| palm oil | 48.6 | 49.34 | 49.26 | 49.29 | 49.11 | 48 | 48 | 48 | 48 | 48 | 48 | 48 | 48 | 48 | 48 | 48 | 48 | 48 | 42 |
| DATEM | 10 | 10 | 10 | 10 | 10 | 10 | 10 | 10 | 10 | 10 | 10 | 10 | 10 | 10 | 10 | 10 | 10 | 10 | 10 |
| ammonium carbonate | 1.4 | | | | | | | | | | | | | | | | | | |
| calcium hydroxide | | 0.66 | | | | | | | | | | | | | | | | | |
| magnesium carbonate | | | 0.74 | | | | | | | | | | | | | | | | |
| sodium hydroxide | | | | 0.71 | | | | | | | | | | | | | | | |
| calcium carbonate | | | | | 0.89 | | | | | | | | | | | | | | |
| sodium ascorbate | | | | | | 2 | | | | | | | | | | | | | |
| sodium pyrophosphate | | | | | | | 2 | | | | | | | | | | | | |
| potassium pyrophosphate | | | | | | | | 2 | | | | | | | | | | | |
| dipotassium phosphate | | | | | | | | | 2 | | | | | | | | | | |
| trisodium phosphate | | | | | | | | | | 2 | | | | | | | | | |
| sodium citrate | | | | | | | | | | | 2 | | | | | | | | |
| monosodium glutamate | | | | | | | | | | | | 2 | | | | | | | |
| disodium succinate | | | | | | | | | | | | | 2 | | | | | | |
| sodium tartrate | | | | | | | | | | | | | | 2 | | | | | |
| disodium phosphate | | | | | | | | | | | | | | | 2 | | | | |
| sodium hydrogen carbonate | | | | | | | | | | | | | | | | 2 | | | |
| sodium acetate | | | | | | | | | | | | | | | | | 2 | | |
| diammonium phosphate | | | | | | | | | | | | | | | | | | 2 | |
| trisodium phosphate | | | | | | | | | | | | | | | | | | | 8 |

and having a pH of 2.0 to 12.0, wherein a fat phase consisting of palm oil and DATEM in the amounts as stated in Tables 1 and 2 and a water phase consisting of water and base or salt specified in Tables 1 and 2 in the amounts as stated in Tables 1 and 2 are premixed and the premixed emulsion is cooled by a tubular cooler, a cooling drum or a plate type heat exchanger are premixed and the premixed emulsion is cooled by a tubular cooler, a cooling drum or a plate type heat exchanger.

This object is also achieved by a second process for preparing an emulsion having a composition according to any of the embodiments 33 to 36 according to Table 3.

Table 3

|  | embodiments | | | |
|---|---|---|---|---|
|  | 33 | 34 | 35 | 36 |
| water | 40% | 40% | 40% | 40% |
| palm oil | 50% | 50% | 50% | 50% |
| sodium salt of DATEM | 10% | | | |
| potassium salt of DATEM | | 10% | | |
| calcium salt of DATEM | | | 10% | |
| magnesium salt of DATEM | | | | 10% |
| pH of an edible emulsion | 7.06 | 6.52 | 5.12 | 5.91 |
| volume of white pan bread (ml) | 2281 | 2208 | 2242 | 2204 |

and having a pH of 2.0 to 12.0 wherein a fat phase consisting of palm oil and a salt of DATEM specified in Table 3 in the amounts as stated in Table 3 and water in the amount as stated in Table 3 are premixed and the premixed emulsion is cooled by a tubular cooler, cooling drum or a plate type heat exchanger.

The DATEM used in the present invention is obtained either by reacting mono- and diglycerides of fatty acids with diacetyl tartaric acid anhydride in the presence of acetic acid or by esterification of mono- and diglycerides with tartaric acid and acetic acid in the presence of acetic acid anhydride.

Therefore, the DATEM used in the present invention is usually obtained as a product which further contains diacetyltartaric acid esters of diglycerides. However, in the present invention, the above product can be used as diacetyltartaric acid esters of monoglycerides.

The pH of an edible emulsion which comprises fat, water and DATEM excluding base and/or salt is approximately between 1.3 to 1.9. If the pH of an edible emulsion is less than 2.0 or more than 12.0, there is no remarkable effect of depressing hydroylsis of DATEM by incorporating base and/or salt. When the pH of an emulsion is adjusted between 2.0 and 12.0, preferably between 3.0 and 9.5, the stability of DATEM remarkably increases.

The emulsion prepared according to the present invention is in an oil-in-water form.

An edible emulsion prepared according to the present invention may be whipped utilizing e.g., air, nitrogen or carbon dioxide before or during the processing of the edible emulsion, or after it has been produced.

Each of the premixed emulsions obtained according to the above two processes of the invention is cooled by a tubular cooler such as a "Votator"®, "Kominator"®, and "Perfector" or a cooling drum such as a "Complector" or a plate type heat exchanger to become an edible emulsion of the present invention.

The second process of the invention incorporates salt of DATEM, instead of DATEM. Salts of DATEM in this process substitute for DATEM and base and/or salts in the first process.

There is no need to incorporate base and/or salt in the edible emulsion containing a salt of DATEM in the second process. The salts of DATEM are incorporated in an edible emulsion having a pH between 2.0 to 12.0, preferably between 3.0 to 9.5.

An edible emulsion prepared according to the present invention can be used as a dough improver for white pan bread. The invention is further illustrated in the following examples:

In these examples the degree of hydrolysis of DATEM incorporated in an edible emulsion was determined (measured) by the acid value, and white pan bread was made by using an edible emulsion of which the baking performance was estimated. The degree of hydrolysis of DATEM incorporated in an edible emulsion is defined by the increase of the acid value after a storage period as shown by the following equation:

$$(degree\ of\ hydrolysis) = (acid\ value\ after\ storage\ period)-(acid\ value\ after\ preparation)$$

definition of acid value: acid value is the number of milligrams of potassium hydroxide (KOH) required to neutralize 1 gram of DATEM incorporated in an edible emulsion.

Analytical procedure of determining the acid value:

1. About one gram of the sample of the edible emulsion is precisely measured in a 300 to 500 ml flask with a plug for dissolving the sample.

   If it is difficult to dissolve the sample, the flask with the plug is warmed up for a short period of time and then cooled after dissolving same.

2. A few drops of 1% phenolphthalein solution is added to the flask.

3. The sample is titrated with a N/10 potassium hydroxide-ethyl alcohol solution.

$$acid\ value = \frac{561.1 \times A \times F}{S \times E}$$

S = The weight of the edible emulsion sample in grams.
E = The percent by weight of the DATEM incorporated in an edible emulsion.
A = The volume of N/10 potassium hydroxide-ethyl alcohol solution in milliliters.
F = The factor of N/10 potassium hydroxide-ethyl alcohol solution.

The degree of hydrolysis of DATEM incorporated in an edible emulsion largely affects the performance of the emulsion as a dough improver for confectionery, breads and noodles.

The degree of hydrolysis of DATEM adversely correlates with performance test results in preparing white pan bread.

4

The evaluation of the edible emulsion in preparing bread is as follows:

The evaluation method is an ill-treatment test, which means that drop shocks are given to the dough, which is taken from the fermenter. It is the most suitable method for evaluating the activity of the emulsion, which has gluten strengthening and gluten protection properties such as DATEM. (evaluation method of an edible emulsion in preparing bread) white pan bread recipe ... 70% sponge dough system

| (sponge) | |
| --- | --- |
| strong flour | 70 parts by weight (350 g) |
| yeast | 2.5 parts by weight (12.5 g) |
| yeast food | 0.4 parts by weight (2 g) |
| water | 42 parts by weight (210 g) |

| (dough) | |
| --- | --- |
| strong flour | 30 parts by weight (150 g) |
| sugar | 5 parts by weight (25 g) |
| salt | 2 parts by weight (10 g) |
| water | 28 parts by weight (140 g) |

an edible emulsion of the present invention*

(Preparation Procedure)

1.Kneading sponge (15x1.14 liters (15 quarts) vertical mixer)

2 min. on speed L
2 min. on speed M
1 min. on speed H
sponge temperature after kneading: 24 - 27°C
floor time: 3 hours at 30°C
sponge temperature after floor time: 30 - 31°C

2.Dough

2 min. on speed L
3 min. on speed M
1 min. on speed H
adding an edible emulsion
2 min. on speed L
2 min. on speed M
4 min. on speed H
dough temperature after kneading: 26-30°C
floor time: 30 min. at 30°C
weighing and rounding: 450 g x 2
intermediate proof: 15 min.

*The amount of an edible emulsion prepared according to the present invention is conditioned in a manner that the amount of DATEM is 0.5 parts by weight of flour of 100 parts by weight.

proofing: at 38°C and 70% R.H. proofing until the dough is 2.5 cm over the edge of the tin

drop shocking: the tin with the fermented dough drops 5 cm 8 times

baking: 20 to 25 min. at 220°C

Evaluation: Above mentioned procedure is repeated four times at intervals of 30 to 40 minutes. Breads are wrapped in plastic bags afer cooling and kept at room temperature for three days.

After three days the volume (ml) of 8 breads is measured and the mean volume value is estimated.

Examples 1 to 12:

According to the components depicted in Table 4, an oil phase was prepared by adding DATEM (AV 85.7) to fats at a temperature of 50 to 60°C.

An aqueous phase was prepared by adding sodium carbonate (anhydrous) to water at a temperature of 50 to 60°C. The oil phase was added to the aqeuous phase to form a fat-in-water emulsion. The resulting emulsion was cooled by a plate type heat exchanger to produce the final products.

The degree of hydrolysis of an edible emulsion of the present invention was measured after 68 days storage at 5, 15 and 25°C, respectively. The baking performance test was carried out by making white pan bread with 5 parts (0.5 parts at DATEM) by weight of an edible emulsion of the present invention after 68 days storage.

The result is shown in Table 4.

Comparative Examples 1 and 2:

According to the components depicted in Table 4, the preparation procedure, the analytical method and the performance test of Example 1 were used.

The result is shown in Table 4.

Comparative Example 3:

The baking performance test was the same as shown in Example 1, except that an edible emulsion of the present invention was not added.

The resulting average volume of white pan bread was 1910 ml.

Comparative Example 4:

The baking performance test was the same as shown in Example 1, except that 2.5 parts by weight of shortening were added instead of an edible emulsion of the present invention. The resulting average volume of white pan bread was 1910 ml. Even if shortening was used, the result of the ill-treatment test of Comparative Example 4 gave the same result as Comparative Example 3 which contained no additives. It was found that shortening has no gluten strengthening and gluten protecting properties against shock treatment.

Comparative Example 5:

A powdery improver was prepared by incorporating and mixing uniformly 10 parts by weight of DATEM used in Example 1, 50 parts by weight of dextrin, 20 parts by weight of sugar, and 20 parts by weight of wheat flour.

The resulting product was packed in a bag of 25 kg net and stored at room temperature for 68 days. After 68 days storage, extreme lump formation were observed, and it was necessary to crush the lumps and sieve the product prior to use.

Example 13:

An edible emulsion of the present invention was prepared with the same components and conditions as those in Example 9. the baking performance test of an edible emulsion was carried out in the same way as in Example 9.

The resulting average volume of white pan bread was 2281 ml.

According to the above samples 1 to 13 and the Comparative Examples 1 to 5, the following matters became clear:

1. The results of the baking performance test of an edible emulsion containing no salt (sodium carbonate; Comparative Example 1) and of an edible emulsion having a pH less than 2.0, even after adding salt (Comparative Example 2), are the same as those obtained by adding shortening (Comparative Example 4) or without any additive (Comparative Example 3). It was found that the activity of DATEM has been lost completely.

2. An edible emulsion prepared according to the present invention is more efficient that an ordinary improver (Comparative Example 5).

This is the reason why DATEM, in an edible emulsion prepared according to the present invention, is completely hydrated, so that its gluten strengthening characteristics are at a maximum.

Examples 14 to 32:

According to the components depicted in Table 5, an oil phase was prepared by adding DATEM (AV 85.7) to fats at a temperature of 50 to 60°C. An aqeuous phase was prepared by adding base or salt to water at a temperature of 50 to 60°C. The oil phase was added to the aqeuous phase to form a fat-in-water emulsion. The resulting emulsion was cooled by a plate type heat exchanger to produce the final product.

The baking performance test of each edible emulsion was carried out. The resulting average volume of white pan bread is shown in Table 5.

Examples 33 to 36:

According to the components depicted in Table 6, the same procedure as that of Examples 14 to 32 was used. The bakery performance test of the edible emulsions was carried out. The resulting average volume of white pan bread is shown in Table 6. Sales of DATEM, incorporated in Examples 33 to 36, were prepared by the following Manufacturing Examples 1 to 4.

Manufacturing Example 1:
(manufacturing example of the sodium salt of DATEM, incorporated in Example 33)

One mol of tartaric acid and two mols of acetic acid anhydride were reacted to produce diacetyl tartaric acid anhydride. The by-product acetic acid was removed by distillation. One mole of diacetyl tartaric acid anhydride and one mol of mono- and diglyceride of fatty acid were reacted to produce DATEM. One mol of DATEM was reacted with sodium carbonate to produce the sodium salt of DATEM.

Manufacturing Example 2:
(manufacturing example of the potassium salt of DATEM, incorporated in Example 34)

Potassium salt of DATEM was prepared in the same way as in manufacturing Example 1, except that one mol of potassium carbonate, instead of sodium carbonate, was used.

Manufacturing Example 3:
(manufacturing example of the calcium salt of DATEM, incorporated in Example 35)

Calcium salt of DATEM was prepared in the same way as in Manufacturing Example 1, except that 0.5 mol of calcium carbonate, instead of sodium carbonate, was used.

Manufacturing Example 4:
(manufacturing example of the magnesium salt of DATEM. incorporated in Example 36)

Magnesium salt of DATEM was prepared in the same way as in Manufacturing Example 1, except that 0.5 mol of magnesium carbonate, instead of sodium carbonate, was used.

(Effect of the Present Invention):

An edible emulsion prepared according to the present invention produces the following effects.

1. The hydrolysis of DATEM is greatly depressed resulting in an improved performance of DATEM for use in confectionery and bread.

2. A combination improver, incorporating DATEM in an edible emulsion such as, e.g., margarine and cream, has become available, and an improved operative efficiency is achieved.

7

3. The function of an edible emulsion prepared according to the present invention has been improved when compared with an ordinarily prepared improver.

4. When an edible emulsion is formed in the form of an oil-in-water emulsion, it has the advantage that, even if much of DATEM or much of DATEM together with other emulsifiers is incorporated, easier handling of the edible emulsion is possible over a wide temperature range.

EP 0 251 020 B2

Table 4

| | | comparative examples | | examples | | | | | | | | | | | | |
|---|---|---|---|---|---|---|---|---|---|---|---|---|---|---|---|---|
| | | 1 | 2 | 1 | 2 | 3 | 4 | 5 | 6 | 7 | 8 | 9 | 10 | 11 | 12 |
| water | | 40 % | 40 % | 40 % | 40 % | 40 % | 40 % | 40 % | 40 % | 40 % | 40 % | 40 % | 40 % | 40 % | 40 % |
| sodium carbonate | | ---- | 0.1% | 0.2% | 0.3% | 0.4% | 0.5% | 0.6% | 0.7% | 0.8% | 0.9% | 1.0% | 2.0% | 4.0% | 8.0% |
| palm oil | | 50 % | 49.9% | 49.8% | 49.7% | 49.6% | 49.5% | 49.4% | 49.3% | 49.2% | 49.1% | 49.0% | 48.0% | 46.0% | 42.0% |
| DATEM | | 10 % | 10 % | 10 % | 10 % | 10 % | 10 % | 10 % | 10 % | 10 % | 10 % | 10 % | 10 % | 10 % | 10 % |
| pH of an edible emulsion | | 1.54 | 1.56 | 2.20 | 2.77 | 3.14 | 3.24 | 3.84 | 4.96 | 6.15 | 6.67 | 7.12 | 7.99 | 9.44 | 9.59 |
| degree of hydrolysis | 5 °C | 51.8 | 41.2 | 33.8 | 22.0 | 14.5 | 3.7 | 3.2 | 0 | 0 | 0 | 0 | 0 | 0 | 0 |
| | 15 °C | 102.7 | 83.2 | 73.1 | 52.4 | 37.3 | 25.2 | 14.8 | 11.6 | 0 | 3.9 | 1.3 | 0 | 0 | 0 |
| | 25 °C | 147.1 | 135.6 | 111.0 | 98.7 | 84.3 | 67.5 | 50.1 | 37.7 | 3.4 | 21.7 | 2.1 | 0 | 0 | 0 |
| volume of white pan bread (ml) | 5 °C | 1940 | 1972 | 2149 | 2165 | 2220 | 2232 | 2240 | 2252 | 2270 | 2271 | 2265 | 2265 | 2262 | 2251 |
| | 15 °C | 1910 | 1920 | 2020 | 2025 | 2090 | 2158 | 2212 | 2138 | 2136 | 2128 | 2199 | 2120 | 2130 | 2122 |

EP 0 251 020 B2

Table 5

| | examples | | | | | | | | | | | | | | | | | | |
|---|---|---|---|---|---|---|---|---|---|---|---|---|---|---|---|---|---|---|---|
| | 14 | 15 | 16 | 17 | 18 | 19 | 20 | 21 | 22 | 23 | 24 | 25 | 26 | 27 | 28 | 29 | 30 | 31 | 32 |
| water | 40% | 40% | 40% | 40% | 40% | 40% | 40% | 40% | 40% | 40% | 40% | 40% | 40% | 40% | 40% | 40% | 40% | 40% | 40% |
| palm oil | 48.6 | 49.34 | 49.26 | 49.29 | 49.11 | 48 | 48 | 48 | 48 | 48 | 48 | 48 | 48 | 48 | 48 | 48 | 48 | 48 | 42 |
| DATEM | 10 | 10 | 10 | 10 | 10 | 10 | 10 | 10 | 10 | 10 | 10 | 10 | 10 | 10 | 10 | 10 | 10 | 10 | 10 |
| ammonium carbonate | 1.4 | | | | | | | | | | | | | | | | | | |
| calcium hydroxide | | 0.66 | | | | | | | | | | | | | | | | | |
| magnesium carbonate | | | 0.74 | | | | | | | | | | | | | | | | |
| sodium hydroxide | | | | 0.71 | | | | | | | | | | | | | | | |
| calcium carbonate | | | | | 0.89 | | | | | | | | | | | | | | |
| sodium ascorbate | | | | | | 2 | | | | | | | | | | | | | |
| sodium pyrophosphate | | | | | | | 2 | | | | | | | | | | | | |
| potassium pyrophosphate | | | | | | | | 2 | | | | | | | | | | | |
| dipotassium phosphate | | | | | | | | | 2 | | | | | | | | | | |
| trisodium phosphate | | | | | | | | | | 2 | | | | | | | | | |
| sodium citrate | | | | | | | | | | | 2 | | | | | | | | |
| monosodium glutamate | | | | | | | | | | | | 2 | | | | | | | |
| disodium succinate | | | | | | | | | | | | | 2 | | | | | | |
| sodium tartrate | | | | | | | | | | | | | | 2 | | | | | |
| disodium phosphate | | | | | | | | | | | | | | | 2 | | | | |
| sodium hydrogen carbonate | | | | | | | | | | | | | | | | 2 | | | |
| sodium acetate | | | | | | | | | | | | | | | | | 2 | | |
| diammonium phosphate | | | | | | | | | | | | | | | | | | 2 | |
| trisodium phosphate | | | | | | | | | | | | | | | | | | | 8 |
| pH of an edible emulsion | 6.90 | 5.12 | 5.91 | 4.65 | 3.25 | 3.59 | 5.47 | 4.33 | 4.66 | 4.71 | 4.19 | 3.76 | 4.26 | 3.49 | 4.68 | 7.11 | 4.40 | 5.58 | 10.17 |
| volume of white pan bread (ml) | 2249 | 2242 | 2204 | 2156 | 2147 | 2200 | 2252 | 2199 | 2187 | 2200 | 2223 | 2195 | 2232 | 2208 | 2189 | 2212 | 2195 | 2243 | 2191 |

Table 6

| | examples | | | |
|---|---|---|---|---|
| | 33 | 34 | 35 | 36 |
| water | 40% | 40% | 40% | 40% |
| palm oil | 50% | 50% | 50% | 50% |
| sodium salt of DATEM | 10% | | | |
| potassium salt of DATEM | | 10% | | |
| calcium salt of DATEM | | | 10% | |
| magnesium salt of DATEM | | | | 10% |
| pH of an edible emulsion | 7.06 | 6.52 | 5.12 | 5.91 |
| volume of white pan bread (ml) | 2281 | 2208 | 2242 | 2204 |

**Claims**

1.  A process for preparing an emulsion having a composition according to any of the embodiments 1 to 12 of Table 1 or according to any of the embodiments 14 to 32 of Table 2

Table 1

| | Embodiments | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| water | 40 % | 40 % | 40 % | 40 % | 40 % | 40 % | 40 % | 40 % | 40 % | 40 % | 40 % | 40 % |
| sodium carbonate | 0.2% | 0.3% | 0.4% | 0.5% | 0.6% | 0.7% | 0.8% | 0.9% | 1.0% | 2.0% | 4.0% | 8.0% |
| palm oil | 49.8% | 49.7% | 49.6% | 49.5% | 49.4% | 49.3% | 49.2% | 49.1% | 49.0% | 48.0% | 46.0% | 42.0% |
| DATEM | 10 % | 10 % | 10 % | 10 % | 10 % | 10 % | 10 % | 10 % | 10 % | 10 % | 10 % | 10 % |

Table 2

| | Embodiments | | | | | | | | | | | | | | | | | | |
|---|---|---|---|---|---|---|---|---|---|---|---|---|---|---|---|---|---|---|---|
| | 14 | 15 | 16 | 17 | 18 | 19 | 20 | 21 | 22 | 23 | 24 | 25 | 26 | 27 | 28 | 29 | 30 | 31 | 32 |
| water | 40% | 40% | 40% | 40% | 40% | 40% | 40% | 40% | 40% | 40% | 40% | 40% | 40% | 40% | 40% | 40% | 40% | 40% | 40% |
| palm oil | 48.6 | 49.34 | 49.26 | 49.29 | 49.11 | 48 | 48 | 48 | 48 | 48 | 48 | 48 | 48 | 48 | 48 | 48 | 48 | 48 | 42 |
| DATEM | 10 | 10 | 10 | 10 | 10 | 10 | 10 | 10 | 10 | 10 | 10 | 10 | 10 | 10 | 10 | 10 | 10 | 10 | 10 |
| ammonium carbonate | 1.4 | | | | | | | | | | | | | | | | | | |
| calcium hydroxide | | 0.66 | | | | | | | | | | | | | | | | | |
| magnesium carbonate | | | 0.74 | | | | | | | | | | | | | | | | |
| sodium hydroxide | | | | 0.71 | | | | | | | | | | | | | | | |
| calcium carbonate | | | | | 0.89 | | | | | | | | | | | | | | |
| sodium ascorbate | | | | | | 2 | | | | | | | | | | | | | |
| sodium pyrophosphate | | | | | | | 2 | | | | | | | | | | | | |
| potassium pyrophosphate | | | | | | | | 2 | | | | | | | | | | | |
| dipotassium phosphate | | | | | | | | | 2 | | | | | | | | | | |
| trisodium phosphate | | | | | | | | | | 2 | | | | | | | | | |
| sodium citrate | | | | | | | | | | | 2 | | | | | | | | |
| monosodium glutamate | | | | | | | | | | | | 2 | | | | | | | |
| disodium succinate | | | | | | | | | | | | | 2 | | | | | | |
| sodium tartrate | | | | | | | | | | | | | | 2 | | | | | |
| disodium phosphate | | | | | | | | | | | | | | | 2 | | | | |
| sodium hydrogen carbonate | | | | | | | | | | | | | | | | 2 | | | |
| sodium acetate | | | | | | | | | | | | | | | | | 2 | | |
| diammonium phosphate | | | | | | | | | | | | | | | | | | 2 | |
| trisodium phosphate | | | | | | | | | | | | | | | | | | | 8 |

and having a pH of 2.0 to 12.0, wherein a fat phase consisting of palm oil and DATEM in the amounts as stated in Tables 1 and 2 and a water phase consisting of water and base or salt specified in Tables 1 and 2 in the amounts as stated in Tables 1 and 2 are premixed and the premixed emulsion is cooled by a tubular cooler, a cooling drum or a plate type heat exchanger.

2. A process for preparing an emulsion having a composition according to any of the embodiments 33 to 36 according to Table 3

Table 3

|  | embodiments | | | |
|---|---|---|---|---|
|  | 33 | 34 | 35 | 36 |
| water | 40% | 40% | 40% | 40% |
| palm oil | 50% | 50% | 50% | 50% |
| sodium salt of DATEM | 10% | | | |
| potassium salt of DATEM | | 10% | | |
| calcium salt of DATEM | | | 10% | |
| magnesium salt of DATEM | | | | 10% |

and having a pH of 2.0 to 12.0 wherein a fat phase consisting of palm oil and a salt of DATEM specified in Table 3 in the amounts as stated in Table 3 and water in the amount as stated in Table 3 are premixed and the premixed emulsion is cooled by a tubular cooler, cooling drum or a plate type heat exchanger.

3. Use of any of the emulsion compositions prepared according to one of the claims 1 or 2 as dough improver for white pan bread.

**Patentansprüche**

1. Verfahren zum Herstellen einer Emulsion mit einer Zusammensetzung gemäß einer der Ausführungsformen 1 bis 12 der Tabelle 1 oder gemäß einer der Ausführungsformen 14 bis 32 der Tabelle 2

Tabelle 1

|  | Wasser | Natriumcarbonat | Palmöl | DATEM |
|---|---|---|---|---|
| Ausführungsformen | | | | |
| 1 | 40% | 0,2% | 49,8% | 10% |
| 2 | 40% | 0,3% | 49,7% | 10% |
| 3 | 40% | 0,4% | 49,6% | 10% |
| 4 | 40% | 0,5% | 49,5% | 10% |
| 5 | 40% | 0,6% | 49,4% | 10% |
| 6 | 40% | 0,7% | 49,3% | 10% |
| 7 | 40% | 0,8% | 49,2% | 10% |
| 8 | 40% | 0,9% | 49,1% | 10% |
| 9 | 40% | 1,0% | 49,0% | 10% |
| 10 | 40% | 2,0% | 48,0% | 10% |
| 11 | 40% | 4,0% | 46,0% | 10% |
| 12 | 40% | 8,0% | 42,0% | 10% |

Tabelle 2

| Ausführungsformen | | | | | | | | |
|---|---|---|---|---|---|---|---|---|
| | 14 | 15 | 16 | 17 | 18 | 19 | 20 | 21 |
| Wasser | 40% | 40% | 40% | 40% | 40% | 40% | 40% | 40% |
| Palmöl | 48,6 | 49,34 | 49,26 | 49,29 | 49,11 | 48 | 48 | 48 |
| DATEM | 10 | 10 | 10 | 10 | 10 | 10 | 10 | 10 |
| Ammonium-carbonat | 1,4 | | | | | | | |
| Calcium-hydroxid | | 0,66 | | | | | | |
| Magnesium-carbonat | | | 0,74 | | | | | |
| Natrium-hydroxid | | | | 0,71 | | | | |
| Calcium-carbonat | | | | | 0,89 | | | |
| Natrium-ascorbat | | | | | | 2 | | |
| Natriumpy-rophosphat | | | | | | | 2 | |
| Kaliumpyro-phosphat | | | | | | | | 2 |

| Ausführungsformen | | | | | | | | |
|---|---|---|---|---|---|---|---|---|
| | 22 | 23 | 24 | 25 | 26 | 27 | 28 | 29 |
| Wasser | 40% | 40% | 40% | 40% | 40% | 40% | 40% | 40% |
| Palmöl | 48 | 48 | 48 | 48 | 48 | 48 | 48 | 48 |
| DATEM | 10 | 10 | 10 | 10 | 10 | 10 | 10 | 10 |
| Dikalium-phosphat | 2 | | | | | | | |
| Trinatrium-phosphat | | 2 | | | | | | |
| Natriumcitrat | | | 2 | | | | | |
| Mononatri-umglutamat | | | | 2 | | | | |
| Dinatrium-succinat | | | | | 2 | | | |
| Natrium-tartrat | | | | | | 2 | | |
| Dinatrium-phosphat | | | | | | | 2 | |
| Natriumhydro-gencarbonat | | | | | | | | 2 |

| Ausführungsformen | | |
|---|---|---|
| | 30 | 31 | 32 |
| Wasser | 40% | 40% | 40% |
| Palmöl | 48 | 48 | 42 |
| DATEM | 10 | 10 | 10 |
| Natriumacetat | 2 | | |
| Diammonium-phosphat | | 2 | |
| Trinatrium-phosphat | | | 8 |

und mit einem pH von 2,0 bis 12,0, worin eine Fettphase, bestehend aus Palmöl und DATEM in Mengen, wie in den Tabellen 1 und 2 ausgeführt ist, und eine Wasserphase, bestehend aus Wasser und Base oder Salz, spezifiziert in den Tabellen 1 und 2, in den Mengen, wie in den Tabellen 1 und 2 ausgeführt ist, vorgemischt werden, und die vorgemischte Emulsion durch einen Röhrenkühler, eine Kühltrommel oder einen Plattenwärmeaustauscher gekühlt wird.

**EP 0 251 020 B2**

2. Verfahren zum Herstellen einer Emulsion mit einer Zusammensetzung gemäß einer der Ausführungsformen 33 bis 36 gemäß der Tabelle 3

Tabelle 3

|  | Ausführungsformen | | | |
|---|---|---|---|---|
|  | 33 | 34 | 35 | 36 |
| Wasser | 40% | 40% | 40% | 40% |
| Palmöl | 50% | 50% | 50% | 50% |
| Natriumsalz von DATEM | 10% | | | |
| Kaliumsalz von DATEM | | 10% | | |
| Calciumsalz von DATEM | | | 10% | |
| Magnesiumsalz von DATEM | | | | 10% |

und mit einem pH von 2,0 bis 12,0, worin eine Fettphase, bestehend aus Palmöl und einem in der Tabelle 3 spezifizierten Salz von DATEM in Mengen, wie in Tabelle 3 ausgeführt ist, und Wasser in der Menge, wie in der Tabelle 3 ausgeführt ist, vorgemischt werden, und die vorgemischte Emulsion durch einen Röhrenkühler, eine Kühltrommel oder einen Plattenwärmeaustauscher gekühlt wird.

3. Verwendung einer der Emulsionszusammensetzungen, hergestellt nach einem der Ansprüche 1 oder 2, als Teigverbesserer für weißes Pfannenbrot.

**Revendications**

1. Procédé de préparation d'une émulsion ayant une composition selon l'un quelconque des modes de mise en oeuvre 1 à 12 ou tableau 1 ou selon l'un quelconque des modes de mise en oeuvre 14 à 32 du tableau 2

Tableau 1

|  | eau | carbonate de sodium | huile de palme | DATEM |
|---|---|---|---|---|
| Modes de mise en oeuvre | | | | |
| 1 | 40% | 0,2% | 49,8% | 10% |
| 2 | 40% | 0,3% | 49,7% | 10% |
| 3 | 40% | 0,4% | 49,6% | 10% |
| 4 | 40% | 0,5% | 49,5% | 10% |
| 5 | 40% | 0,6% | 49,4% | 10% |
| 6 | 40% | 0,7% | 49,3% | 10% |
| 7 | 40% | 0,8% | 49,2% | 10% |
| 8 | 40% | 0,9% | 49,1% | 10% |
| 9 | 40% | 1,0% | 49,0% | 10% |
| 10 | 40% | 2,0% | 48,0% | 10% |
| 11 | 40% | 4,0% | 46,0% | 10% |
| 12 | 40% | 8,0% | 42,0% | 10% |

16

Tableau 2

| Modes de mise en oeuvre | | | | | | | | |
|---|---|---|---|---|---|---|---|---|
| | 14 | 15 | 16 | 17 | 18 | 19 | 20 | 21 |
| eau | 40% | 40% | 40% | 40% | 40% | 40% | 40% | 40% |
| huile de palme | 48,6 | 49,34 | 49,26 | 49,29 | 49,11 | 48 | 48 | 48 |
| DATEM | 10 | 10 | 10 | 10 | 10 | 10 | 10 | 10 |
| carbonate d'ammonium | 1,4 | | | | | | | |
| hydroxyde de calcium | | 0,66 | | | | | | |
| carbonate de magnesium | | | 0,74 | | | | | |
| hydroxyde de sodium | | | | 0,71 | | | | |
| carbonate de calcium | | | | | 0,89 | | | |
| ascorbate de sodium | | | | | | 2 | | |
| pyrophosphate de sodium | | | | | | | 2 | |
| pyrophosphate de potassium | | | | | | | | 2 |

Tableau 2 continued

| Modes de mise en oeuvre | | | | | | | | |
|---|---|---|---|---|---|---|---|---|
| | 22 | 23 | 24 | 25 | 26 | 27 | 28 | 29 |
| eau | 40% | 40% | 40% | 40% | 40% | 40% | 40% | 40% |
| huile de palme | 48 | 48 | 48 | 48 | 48 | 48 | 48 | 48 |
| DATEM | 10 | 10 | 10 | 10 | 10 | 10 | 10 | 10 |
| phosphate dipotassique | 2 | | | | | | | |
| phosphate trisodique | | 2 | | | | | | |
| citrate de sodium | | | 2 | | | | | |
| glutamate monosodique | | | | 2 | | | | |
| succinate disodique | | | | | 2 | | | |
| tartrate de sodium | | | | | | 2 | | |
| phosphate disodique | | | | | | | 2 | |
| bicarbonate de sodium | | | | | | | | 2 |

| Modes de mise en oeuvre | | | |
|---|---|---|---|
| | 30 | 31 | 32 |
| eau | 40% | 40% | 40% |
| huile de palme | 48 | 48 | 42 |
| DATEM | 10 | 10 | 10 |
| acetate de sodium | 2 | | |
| phosphate de diammonium | | 2 | |
| phosphate trisodique | | | 8 |

et ayant un pH de 2,0 à 12,0, dans lequel une phase de graisse constituée d'huile de palme et de DATEM dans les quantités telles que présentées aux tableaux 1 et 2 et une phase aqueuse constituée d'eau et d'une base ou d'un sel spécifiés aux tableaux 1 et 2 sont prémélangées, et l'émulsion prémélangée est refroidie par un refroidisseur tubulaire, un tambour de refroidissement ou un échangeur de chaleur du type à plaques.

2. Procédé pour préparer une émulsion ayant une composition selon l'un quelconque des modes de mise en oeuvre 33 à 36 selon le tableau 3

Tableau 3

|  | exemples | | | |
|---|---|---|---|---|
|  | 33 | 34 | 35 | 36 |
| eau | 40 % | 40 % | 40 % | 40 % |
| huile de palme | 50 % | 50 % | 50 % | 50 % |
| sel de sodium de DATEM | 10 % | | | |
| sel de potassium de DATEM | | 10 % | | |
| sel de calcium de DATEM | | | 10 % | |
| sel de magnésium de DATEM | | | | 10 % |

et ayant un pH de 2,0 à 12,0, dans lequel une phase de graisse constituée d'huile de palme et d'un sel de DATEM spécifié au tableau 3 dans les quantités telles que présentées au tableau 3, et de l'eau dans la quantité telle que présentée au tableau 3, sont prémélangées et l'émulsion prémélangée est refroidie par un refroidisseur tubulaire, un tambour de refroidissement ou un échangeur de chaleur du type a plaques.

3. Utilisation de l'une quelconque des compositions d'émulsion préparées selon l'une quelconque des revendications 1 à 2, en tant qu'améliorant de pâte pour le pain *white pan*.